# EUROPEAN PATENT APPLICATION

(11) **EP 2 770 164 A1**
(43) Date of publication of application: **27.08.2014**
(21) Application number: 13000885.7
(22) Date of filing: 22.02.2013
(51) Int. Cl.: F01D 9/04, F03G 7/04, F01D 1/06, F01D 1/32, F01D 25/32

(54) **A turbine having a radial outflow rotor and radial inflow stator**

(71) Applicant: Geislataekni ehf, 210 Gardabae (IS)
(72) Inventor: Leossson, Jon, 112 Reykjavik (IS)
(74) Representative: Reynaldsson, Gudmundur

(57) **Abstract**

This invention relates to a turbine having a radial outflow rotor wheel on a driving shaft, and a radial inflow stator and when low quality steam with high moisture content is used as the working fluid, moisture removal stage can be installed. The radial inflow stator includes plurality of nozzles surrounding an inner circumferential space adapted to form a vortex flow at the periphery of the circumferential space, a nozzle distributor with a port hole for each nozzle for distributing inflow into the nozzles from a high pressure cavity and to close the upstream side of the nozzles and a vortex retainer adapted to provide a circular vortex port for flow exit out of the stator and tangential into the radial outflow rotor wheel.

## Description

### FIELD OF THE INVENTION

The present invention relates to a turbine having a radial outflow rotor wheel on a driving shaft and a radial inflow stator.

### BACKGROUND OF THE INVENTION

US 2006/0133921 discloses radial-inflow Euler steam turbine including a rotor on a shaft having in combination stationary nozzles. The high velocity steam leaving the nozzles is directed into Euler passages formed by the rotating rotor blades in a generally radial direction, but the passages have a narrow-extending cross section with the end where the steam enters the rotor being larger than the end where the steam leaves the flow path so as to accelerate the steam. The resulting pressure difference over rotor is remained by a seal means. Although this turbine has several advantages over prior are steam turbines such as in efficiency and robustness it is still has several drawbacks such that it is relatively spacious in axial direction, which is an hindrance in a multi stage multi rotor arrangement of a turbine.

In general, when energy be is being extracted from steam in a turbine such as the one mentioned above, the key issue to consider is a phenomena called "critical pressure ratio". The critical pressure ratio is the pressure ratio causing an acceleration of the steam flow to a velocity equal to the local velocity of sound in the fluid. Because of this, when critical pressure ratio exists across a nozzle, the flow rate at the throat of the nozzle equals the local velocity of sound in the fluid. Increasing the upstream / downstream pressure ratio above the critical pressure ratio, will not increase flow rate further and is simply a waist of thermal energy. The critical pressure ratio and velocity of sound in steam varies with thermal dynamic parameters, that is, pressure and temperature. The critical pressure ratio of saturated steam is approximately around 0.58.

Also, the complexity of the rotor and stator requires that these components must be casted, which increases the production costs significantly. To make the turbine resistant to erosion damages when being implemented in high-pressure geothermal environment requires that the rotor must be made of costly elements such as titanium alloy, which makes the manufacturing costs of such turbines even more expensive. Further, the fact that seal means arranged over the rotor must be implemented may result in higher maintenance and even make the turbine less robust when implementing it with extreme conditions such as in high-pressure geothermal environment.

The inventor of the present invention has appreciated that there is thus a need for a less spacious and more efficient steam turbine where at the same time the production costs are reduced significantly and has in consequence devised the present invention.

### SUMMARY OF THE INVENTION

It would be advantageous to achieve a turbine that is robust and compact with low manufacturing cost. In general, the invention preferably seeks to mitigate, alleviate or eliminate one or more of the above mentioned disadvantages singly or in any combination. In particular, it may be seen as an object of the present invention to provide a turbine that solved the above mentioned problems, or other problems, of the prior art.

To better address one or more of these concerns, in a first aspect of the invention a turbine is provided comprising:
- a radial outflow rotor wheel on a driving shaft, and
- a radial inflow stator comprising:
- plurality of nozzles surrounding an inner circumferential space adapted to form a vortex flow at the periphery of said circumferential space,
- a nozzle distributor with a port hole for each nozzle for distributing inflow into said nozzles from a high pressure cavity and to close the up-stream side of the nozzles,
- a vortex retainer adapted to provide a circular vortex port for flow exit out of the stator and tangential into said radial outflow rotor wheel.

Accordingly, a turbine is provided that combines in a unique way a radial outflow rotor wheel with a radial inflow stator in one and the same turbine. The nozzles may be easily be designed with e.g. respect to their length and/or shape so as to produce high flow "quality" where the agitation of the flow and the energy loss is reduced but at the same time the focus of the flow is enhanced which in combination with the centrifugal force makes the vortex extremely localized. This results in that the efficiency of the turbine, when the flow from the vortex tangential into the radial outflow rotor wheel and gives ultimate flow effect. This is an enhancement compared to prior art turbines.

The advance of utilizing an outflow rotor compared to an inflow type is that any liquids or solids are centrifuged out of the rotor parallel with the steam flow rather than being centrifuged against the flow as happens in an inflow rotor. Accordingly, an advantage of the turbine with said outflow rotor is that it can start without preheating but a condensate in a cold inflow rotor will prevent it from starting. And further if a condensate occurs in a running rotor, liquids are centrifuged out of the outflow rotor but are more or less trapped in an inflow rotor.

Based on the above, one may conclude that said turbine that is utilizes an inflow stator and outflow rotor enjoys "the best of both worlds".

In one embodiment, the radial inflow stator is made of assembly of plates arranged concentrically face to face, comprising:
- a first plate where said plurality of nozzles are formed at the periphery of said circumferential space of said first plate,
- a second plate forming said nozzle distributor where said port hole for each nozzle is formed, the second plate having a circumferential hole of the same diameter as said first plate, and
- a third plate forming said vortex retainer, the third place having a circumferential hole the diameter of which is equal or less than the diameter of said inner circumferential space, the third plate being adapted to close the downstream side of the nozzles and provide a circular vortex port for flow exit out of the stator and tangential into said radial outflow rotor wheel.

Accordingly, the fact that said plates can be produced via using any standard cutting process such as laser cutting or milling process instead of casting the stator is being done in current turbines reduces the manufacturing cost of the turbine. This is mainly because less expensive materials may be implemented as plate material compared to current turbines where the stator components are casted, but at the same time be more robust. Additionally, the fact that this stator is made of assembly of plates makes it possible to manufacture a axially compact stator with a favorable 2D geometry, which requires much less axial space than prior art turbines. The fact that the inner diameter of the third plate is equal or less than the diameter of the inner circumferential space of said nozzle plate creates a flow barrier between said first plate (nozzle plate) and said outflow rotor wheel acting as a control for the tangential flow vortex flowing axially to the radial outflow rotor wheel.

In one embodiment, said plurality of nozzles are two-dimensional nozzles contoured so as to maintain substantial constant acceleration throughout the nozzle length and where the longitudinal axis of the nozzles point substantially tangential into said inner circumferential space.

In one embodiment, the contour between adjacent nozzles has a bulge-like shape so as to guide the received outflow at the tip-point ends of the nozzles towards the periphery of said inner circumferential space. In that way, it is ensured that the localized flow from neighboring nozzle tip points that hits the contour between adjacent nozzles will be reflected substantially tangential towards the periphery of said inner circumferential space and thus maintain said localized vortex.

In one embodiment, said radial outflow rotor wheel comprises:
- a central cylindrical core having a diameter being somewhat less than the diameter of said circumferential space and said circumferential hole of the , and
- plurality of flow paths formed at the periphery of said outflow rotor wheel adapted to interact with said vortex flowing tangential to said radial outflow rotor wheel for producing driving force for the radial outflow rotor wheel, said central cylindrical core being adapted to engage with the cylindrical space formed by said nozzle plate and said vortex port plate such that the plurality of flow paths are positioned at the downstream side above said vortex port plate.

The fact that said plurality of flow paths are positioned at the downstream side above said vortex plate instead of being within the same plane, as in current turbines and which often results in too much resonance, it is ensured that most of the speed in the vortex can be utilized by the radial outflow rotor wheel and at the same time said resonance related problem is no longer an issue.

In one embodiment, said radial outflow rotor wheel has a constant cross section of flow path and is shaped such that the inflow and the outflow from the flow path is substantially tangential to the radial outflow rotor wheel. In that way, almost all the kinetic energy from the inflow into the outflow rotor wheel is utilized to convert the kinetic energy of the inflow into rotational energy of the rotor.

In one embodiment, said turbine further comprises at least one additional row of said stator and said outflow rotor wheel sharing said driving shaft. In that way, a multi pressure stage turbine is provided which is of an advantage in case said lowest final pressure stage is still sufficient to produce additional energy.

In one embodiment, the turbine further comprising a liquid/gas-trap adapted to be placed between said vortex retainer and said rotor wheel for disposing unwanted gases and/or liquids from the turbine entering said rotor.

In one embodiment, said liquid/gas-trap has a plate-like structure having front side and a back side having a circumferential hole of the same diameter as said first plate, the front side comprising channel shaped structures extending from the periphery of said circumferential hole towards to a draining pipe acting as an exit channel from said turbine, said front side being adapted to be situated at the downstream side of said turbine.

Accordingly, any unwanted gases or droplets originating from the incoming power source may be removed out of the turbine before they enter the rotor wheel, causing otherwise either damage of the rotor wheel and/or reduce the throughput of the turbine. In case the power source is e.g. high-pressure steam from a geothermal power station unwanted gases such as CO₂ and H₂S gases, both of which have of higher specific weight than the steam, and act as a resistance for the rotor wheel and thus reduce the efficiency of the turbine. Also, any type of liquids, typically in a form of droplets that would otherwise enter the rotor wheel would cause a kind of a hammering affect that not only reduces the efficiency of the turbine but can also damage the rotor wheel. Thus, by placing such a liquid/gas-trap between said vortex retainer and said rotor wheel any of the above mentioned problems are avoided. In a second aspect of the invention, a radial inflow stator is provided adapted to be used in said turbine, comprising:
- plurality of nozzles surrounding an inner circumferential space adapted to form a vortex flow at the periphery of said circumferential space,
- a nozzle distributor with a port hole for each nozzle for distributing inflow into said nozzles from a high pressure cavity and to close the up-stream side of the nozzles, and
- a vortex retainer adapted to adapted to provide a circular vortex port for flow exit out of the stator and tangential into a radial outflow rotor wheel.

In one embodiment, the radial inflow stator is made of assembly of plates arranged concentrically face to face, comprising:
- a first plate where said plurality of nozzles are formed via cutting out a pattern in said first plate,
- a second plate where said port hole for each nozzle is formed via cut out pattern in said second plate, and
- a third plate forming said vortex retainer, the third place having a circumferential hole the diameter of which is equal or less than the diameter of said inner circumferential space, the third plate being adapted to close the downstream side of the nozzles and provide a circular vortex port for flow exit out of the stator and tangential into said radial outflow rotor wheel.

In a third aspect of the invention, a radial outflow rotor wheel is provided adapted to be used in said turbine, comprising:
- a central cylindrical core having a diameter being somewhat less than the diameter of said circumferential space and said circumferential hole of the , and
- plurality of flow paths formed at the periphery of said outflow rotor wheel adapted to interact with said vortex flowing tangential to said radial outflow rotor wheel for producing driving force for the radial outflow rotor wheel, said central cylindrical core being adapted to engage with the cylindrical space formed by said nozzle plate and said vortex port plate such that the plurality of flow paths are positioned at the downstream side above said vortex port plate.

In one embodiment, said plurality of flow paths have constant cross section of flow path and is shaped such that the outflow from the flow path is substantially tangential to the radial outflow rotor wheel.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
FIG. 1 shows an exploded view an embodiment of a turbine according to the present invention seen from high-pressure up-stream side of the turbine towards a lower-pressure downstream-side,
FIG. 2 shows an exploded view of the embodiment from FIG. 1, but seen from lower-pressure down-stream side towards high-pressure upstream-side,
FIGS. 3-5 show a front view of the plate assembly forming the radial inflow stator shown in FIGS. 1 and 2,
FIG. 6 depict graphically a partial cut away view of the high-pressure up-stream side of the turbine,
FIG. 7 depicts for illustration purpose an cross sectional expanded view of FIG. 6 in the absence of the second plate,
FIG. 8 depicts a cross sectional front view of the radial outflow rotor wheel shown in the embodiment in FIG. 7,
FIG. 9 depict an expanded view of FIG. 8,
FIG. 10 and 11 show an energy flow calculation diagram based on an experimental result,
FIGS. 12 and 13 show a liquid/gas-trap for collecting and disposing any unwanted gases or liquids the may be formed before entering the rotor, and
FIG. 14 shows a cross section view of a turbine according to the present invention where said liquid/gas-trap shown in FIGS. 12 and 13 has be installed between vortex retainer and the rotor.

### DESCRIPTION OF EMBODIMENTS

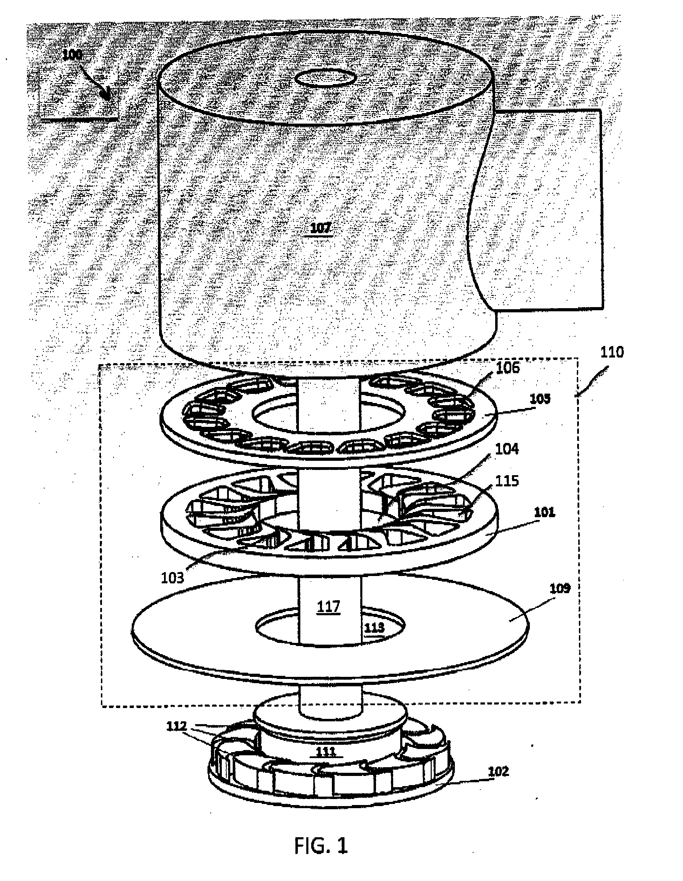

FIG. 1 shows an exploded view an embodiment of a turbine 100 according to the present invention seen from high-pressure up-stream end view of the turbine 100 towards a lower-pressure downstream-side. The turbine 100 comprises a radial outflow rotor wheel 102 on a driving shaft 117 and a radial inflow stator 110. The radial inflow stator 110 comprises plurality of nozzles 103 surrounding an inner circumferential space 104 space adapted to form a vortex flow at the periphery of the circumferential space 104. The radial inflow stator 110 further comprises a nozzle distributor 105 with a port hole 106 for each nozzle 103 for distributing inflow into the nozzles 103 from a high pressure cavity formed by a cap 107 and to close the up-stream side of the nozzles 103. The radial inflow stator 110 further comprises a vortex retainer 109 adapted to provide a circular vortex port for flow exit out of the stator 110 and tangential into the radial outflow rotor wheel 102 on a driving shaft 117. The flow source into an inlet end 118 of the turbine may as an example be high-pressure steam such as from geothermal well.

In the embodiment depicted in FIG. 1 the radial inflow stator 110 is made of assembly of plates arranged concentrically face to face where in a first plate 101 the plurality of nozzles 103 are formed as an example via cutting out a pattern in the first plate 101, where the nozzles comprise an intake-end 115 coupled to an external flow source. A second plate 105 that is arranged at the high-pressure up-stream end of the turbine 100 above the first plate 101 forms the nozzle distributor 105 where the port hole 106 for each nozzle is formed as an example via cut out pattern in the second plate 105. The third plate 109 that is arranged at the lower-pressure downstream-side below the first plate 101 forms the vortex retainer and has a circumferential hole 113 where the diameter is equal or less than the diameter of the inner circumferential space 104. The role of this third plate 109, which in one embodiment may be much thinner that the first plate 101 and as an example be several millimeters, is to close the downstream side of the nozzles 103 and provide a circular vortex port for flow exit out of the stator and tangential into the radial outflow rotor wheel 102. This will be discussed in more details later. The advantage of utilizing such a radial inflow stator 110 is that it has a favorable 2D geometry and is very compact as may be observed from figure 1 (when assembled together). This compactness of the turbine allows adding one or more rows of stator outflow rotor wheel (not shown here) sharing the same driving shaft and therefore make a multi pressure stage turbine which is of an advantage in case the lowest final pressure stage in the turbine is still sufficient to produce additional energy

This arrangement of the nozzles 103, i.e. where the narrower end (the throat) points inwards and substantially tangential to the periphery of the circumferential space 104 and the wider end occupies the outer periphery of the stator 110 opens the possibility to fabricate the nozzles out of any kind of plate material.

It should be noted that although the embodiment here depicts the stator as being of assembly of plats, the stator may just as well be formed via casting procedure in the absence of such plate structure where two or all the plates 105, 101 and 109 may be casted and form a single piece.

As will be discussed in more details later, the radial outflow rotor wheel 102 in the embodiment depicted here is a impulse rotor and comprises a central cylindrical core 111 having a diameter being somewhat less than the diameter of the circumferential space 104 and the circumferential hole 113 and plurality of identical flat shovel like structures 116 having a convex-like back sides and a concave like front sides, where the space between such adjacent shovel like structures defines plurality of passages forming flow paths 112 formed at the periphery of the outflow rotor wheel 112. The central cylindrical core 111 is adapted to engage with the cylindrical space formed by nozzle the plate 101 and the vortex port plate 109 such that the plurality of flow paths are positioned at the downstream side above the vortex retainer 109.

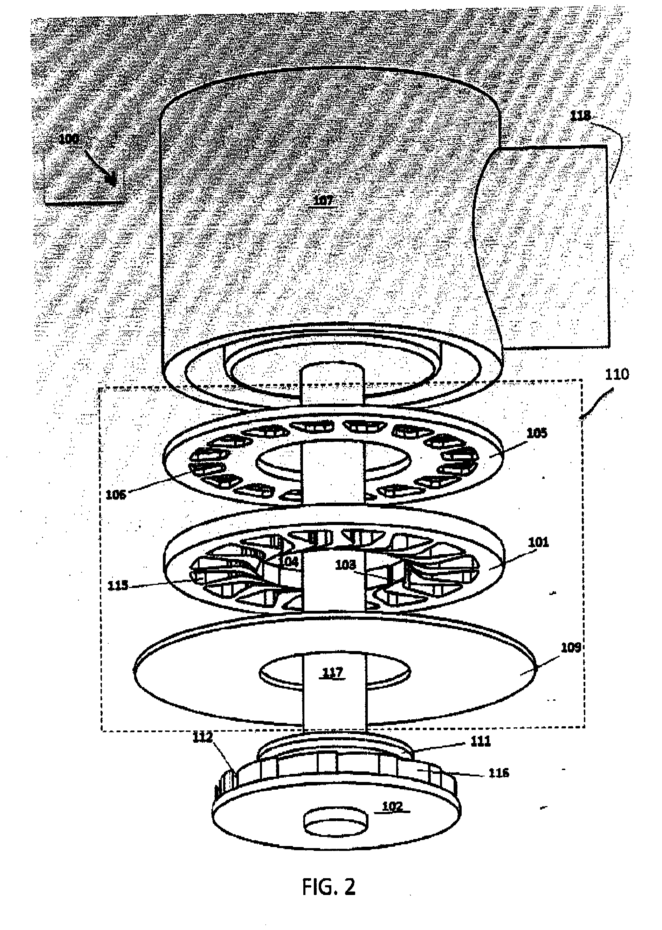

FIG. 2 shows an exploded view of the embodiment from FIG. 1, but seen from lower-pressure down-stream end towards high-pressure upstream-side.

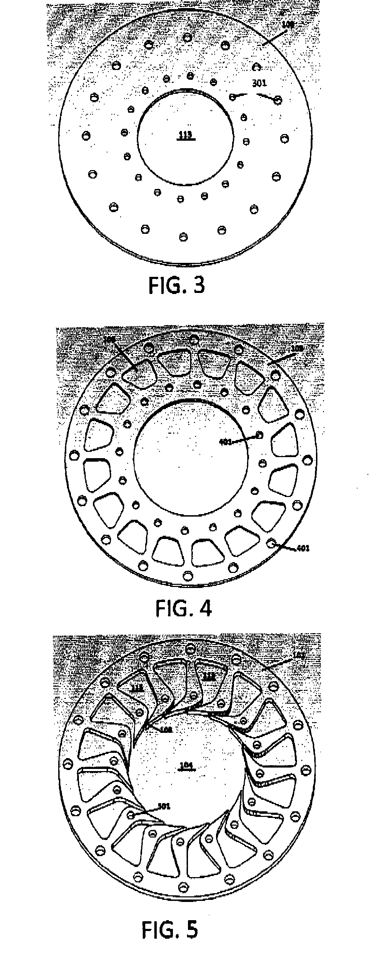

FIGS. 3-5 show a front view of the plate assembly forming the radial inflow stator 110 shown in FIGS. 1 and 2. FIG. 3 depicts a front view of the third plate 109 forming the vortex retainer, FIG. 4 depicts a front view of the second plate 105 forming the nozzle distributor with multiple of port holes 106, and FIG. 5 depicts a front view of the first plate 101 where the plurality of nozzles are formed. As may be seen, the port holes 106 in the nozzle distributor plate 105 are distributed in a similar way as the intake-ends 115 of the nozzles and are also shaped in a substantial the same way so that when the second plate 105 and the first plate 101 are mounted together, the port holes 106 and the intake-ends 115 fit. In that way the second plate 105 acts in a way like a mask for the first plate 101 and closes the up-stream side of the nozzles 103 so that the flow from the high-pressure cavity in the cap 107 shown in FIGS. 2 and 3 into the nozzles occurs through the port holes 106 and the intake ends.

The holes 301, 401 501 shown here may be adapted to mount the plate assembly mutually together by e.g. extend a rod with a thread through the holes and screwing them rigidly together. Other ways may of course be utilized to mount these plates mutually together in a rigid way.

The angle of the nozzles 103 may be adjusted to various parameters, such as to the size of the turbine, the number of nozzles being implanted and the width of the nozzles meaning that the angle depicted here may be different if the number of nozzles is larger or less, and may also be different if the nozzles have more width.

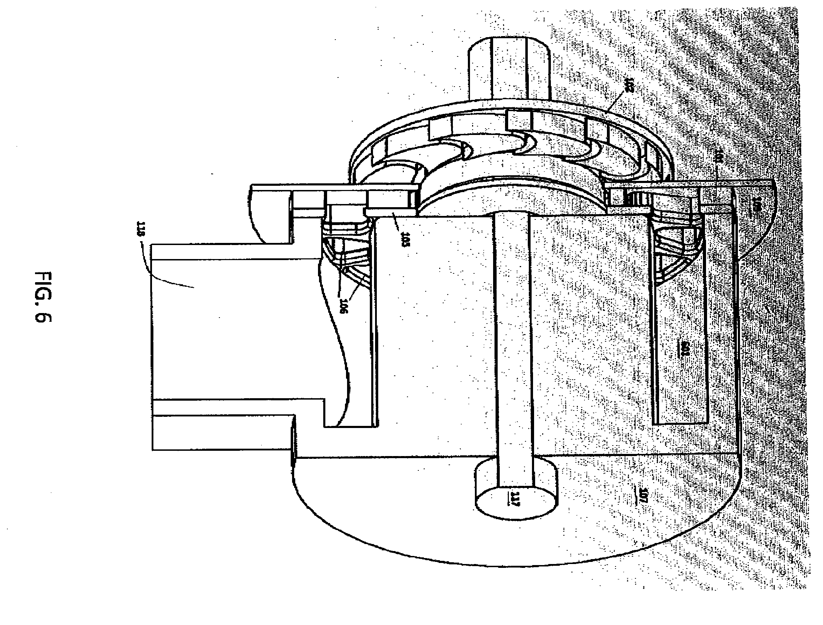

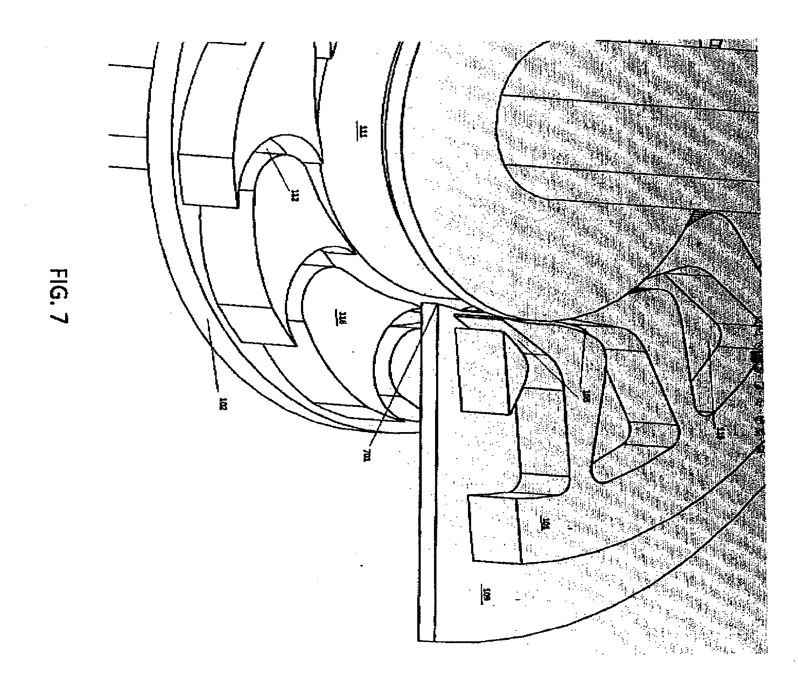

FIG. 6 depicts graphically a cut away view of the high-pressure up-stream end of the turbine 140 shown in FIGS. 1 and 2 when assembled together. For further clarification, a cross section view is shown of the cap 107, the second plate 105, the first plate 101 and the third plate 109 when rigidly mounted together, and the high pressure cavity 601 window positioned at the periphery of the cap 107 around the port holes 106. Shown is also the driving shaft 117. As shown here and in a more detailed way in FIG. 7 the inner diameter of the third plate 109 is somewhat less that the inner diameter of the first plate 101 for creating a flow barrier between for the vortex at the periphery of the inner circumferential space 104 and the radial outflow rotor wheel 102. The lower the diameter of the third plate 109 becomes the larger will this barrier be. In that way, portion of the vortex flow goes axial from the first plate 101 towards the radial outflow rotor wheel 102 where it goes tangential into the radial outflow rotor wheel 102.

Also, FIG. 6 depicts clearly how the second plate 105 acts in a way like a mask for the first plate 101 where the only access to the high-pressure cavity 601 is via the port holes 106. Accordingly, the flow exit is tangential into the first plate 101 and thus into the stator.

FIG. 7 depicts an cross sectional expanded view of FIG. 6 in the absence of the second plate 105, showing in a more detailed way the internal relation between the third plate 109 forming the vortex retainer and the first plate 101 comprising the plurality of nozzles 103 with the intake-ends 115. As shown here, the nozzles have a narrow elongated section that enhances the focus of the flow and which in combination with the centrifugal force makes the vortex at the periphery of said inner circumferential space extremely localized (not shown here). The nozzles 103 formed by said plurality of shovel like structures are contoured so as to maintain substantial constant acceleration throughout the nozzle length and where the longitudinal axis of the nozzles point substantially tangential into the periphery of the inner circumferential space. Also, the geometry of the nozzles may be adapted to the geometry of the turbine in a way such that the length of the nozzles is reduces relatively with enlargement of the turbine. In that way, if the diameter of the turbine is e.g. 1 meter times 1 meters long the relative nozzle length would be correspondingly shorter. Also, the angles of the nozzles pointing inward and towards the inner circumferential area may be adjusted accordingly so as to maintain optimal vortex flow at the periphery of the inner circumferential area.

As depicted, since the diameter of the third plate 109 is less than the diameter of the first plate 101 a protruding portion 701 is formed in relation to the periphery of the first plate 101, which acts as a barrier and limits the axial flow from the vortex at the periphery of the first plate 101 towards the radial outflow rotor wheel 102 and tangential into the flow path of the radial outflow rotor wheel 102. The thickness of this third plate 109 may be much thinner than the thickness of the remaining plates forming the stator. Also, this thickness and the diameter may be adjusted to the flow source characteristics, e.g. the incoming pressure and temperature of the steam, and the size of the turbine.

In the embodiment shown here, the radial outflow rotor wheel 102 has a constant cross section of flow path 112 where the flow path is shaped such that the outflow from the flow path is substantially tangential to the radial outflow rotor wheel 102.

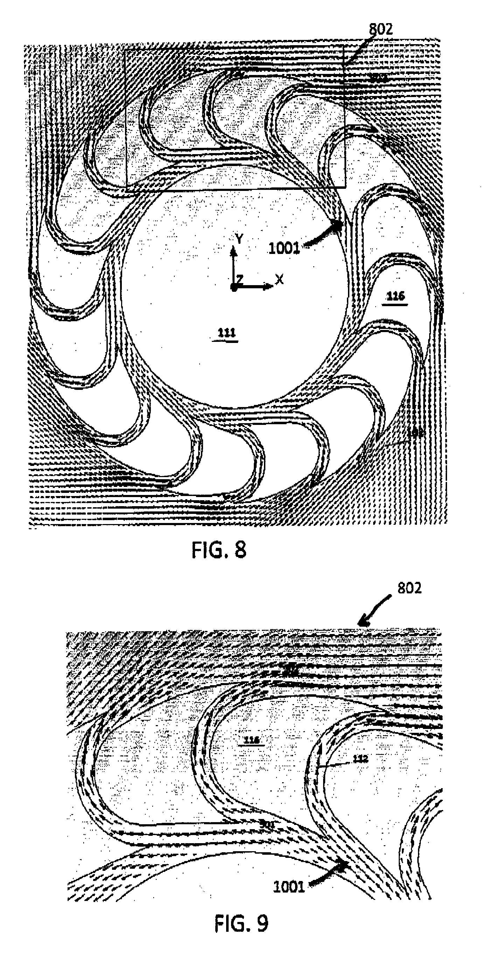

FIG. 8 depicts a cross sectional front view of the radial outflow rotor wheel 102 shown in the embodiment in FIG. 7, and FIG. 9 depicts an expanded view of the portion 802 in FIG. 8. Shown are said multiple of shovels 116 at the periphery of the rotor wheel 102 where the cross sectional distance between adjacent shovels 116 forming said flow path is constant. In that way there will be no pressure difference over the radial outflow rotor wheel 102, which may be result in that sealing means that would otherwise be needed to maintain this pressure difference between the stator and the radial outflow rotor wheel 102 is not needed. The arrows indicate the localized direction of the flow and the density of the arrows indicates the strength of the flow.

As depicted in the expanded view in FIG. 9 the shovels 801 and thus the flow path of the rotor 102 is shaped such that the inflow into the radial outflow rotor wheel 102 and the outflow out of the radial outflow rotor wheel 102 as indicated by arrows 901 and 902 of the flow from the vortex is substantially tangential to the radial outflow rotor wheel 102. In that way, almost all the kinetic energy from the inflow into the outflow rotor wheel is utilized to convert the kinetic energy of the inflow into rotational energy of the rotor.

Such a constant cross-sectional distance between adjacent shovels is however just one embodiment. The flow path may just as well be a narrowing flow path such as one of Euler type of rotor where the flow becomes accelerated throughout the flow path resulting in a pressure difference over the rotor.

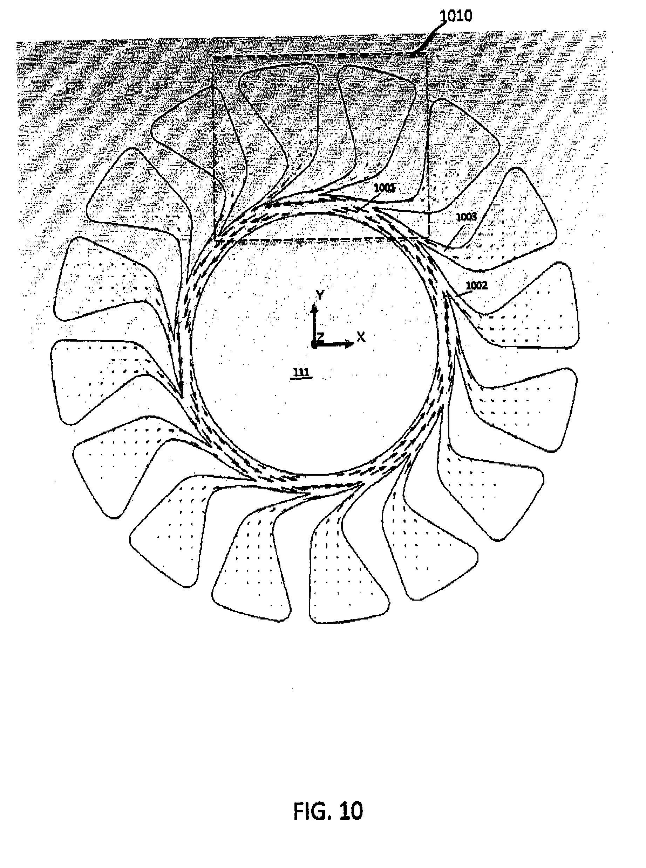

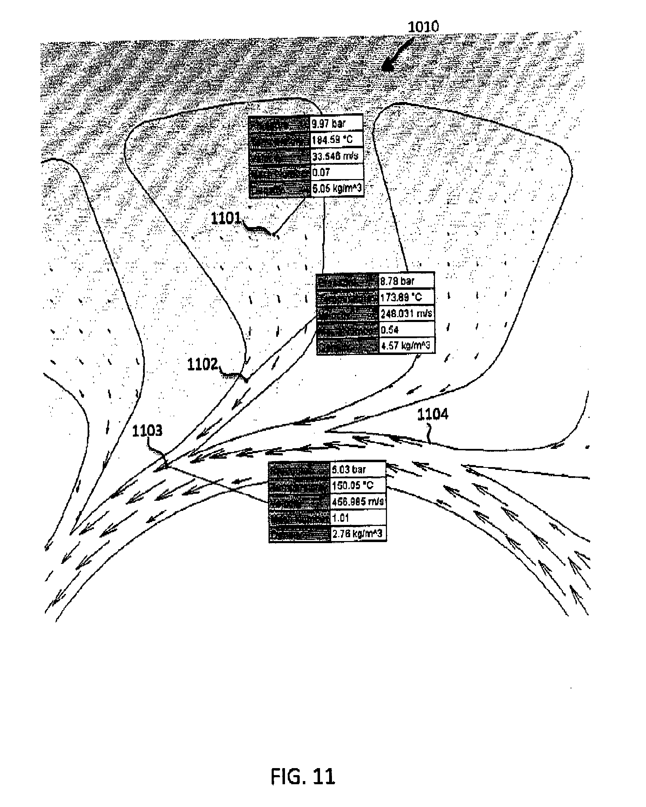

FIG. 10 shows an energy flow calculation diagram based on an experimental result for a setup as shown in FIG. 6 for the turbine according to the present invention for the nozzle plate depicted in FIGS. 1-7, and figure 11 shows an expanded view of the area 1010 indicated by the dotted box.

As may be shown in figure 7 the contour between adjacent nozzles has a bulge-like shape 1104 so as to guide the received outflow at the tip-point ends 1002 of the nozzles towards the periphery of said inner circumferential space. In that way, it is ensured that the localized flow from neighboring nozzle tip points that hits the contour between adjacent nozzles will be reflected substantially tangential towards the periphery of said inner circumferential space and thus maintain said localized vortex.

In this experiment, the outer diameter of all the plates was the same, 12,5 cm and the thickness was the same, 3 mm. The inner diameter of the first plate 101 was 5,3 cm (thickness was 3 mm) and the inner diameter of the second plate 105 forming the vortex retainer is 5,2 cm.

As shown in the overview figure 10, the fact that the longitudinal axis of the nozzles point substantially tangential into said inner circumferential space means that the flow within the nozzles 1002, 1003 as indicated by the arrows comes substantially tangential into said circumferential space and creates highly localized vortex in the area 1001. This highly localized vortex in the area 1001 is transferred axially over to the rotor wheel shown in FIGS. 8 and 9.

The input parameters in the energy flow software program where following: the inflow source was steam flow and the pressure within the high pressure cavity 601 was close to 10 bar.

The initial pressure at the intake-ends 1101 of the nozzles was 9.97 bar, the initial temperature 184.59°C, the velocity 33,546 m/s and the density 5.05 kg/m³. At point 1102, the pressure was 8.78 bar, the temperature 173.89°C, the velocity of the flow 248.031 m/s and the density 4.57 kg/m³. At point 1103, the pressure was 5.03 bar, the temperature 150.05°C, the velocity of the flow 456.985 m/s and the density 2.76 kg/m³. The experimental result shows how extremely localized the vortex flow is as indicated by the arrows in the expanded view.

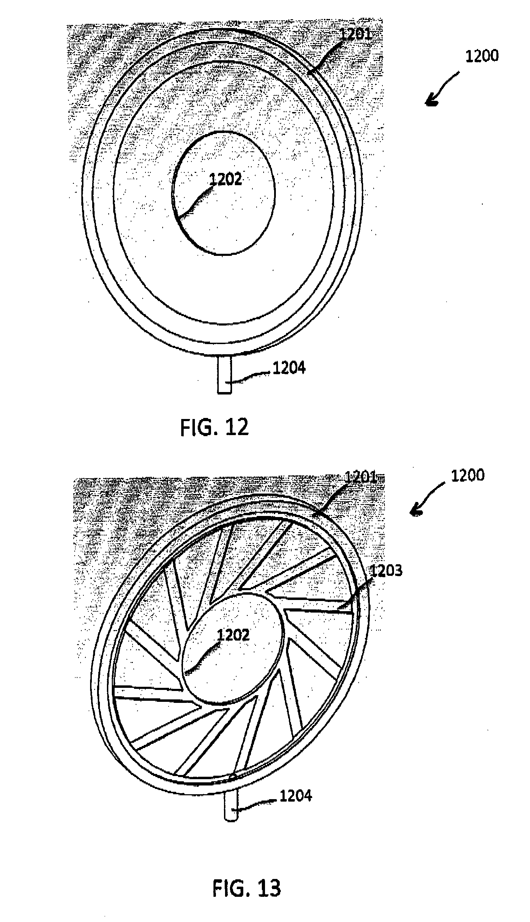

Figure 12 shows an upstream side and figure 13 a downstream side of a liquid/gas-trap 1200 that may be installed between vortex retainer 109 and the rotor 102 discussed previously in relation to figures 1-11 for collecting and disposing any unwanted gases or liquids the may be formed before entering the rotor.

The advantage of implementing such a liquid/gas trap is, as already mentioned to e.g. collect water drops that would otherwise enter the rotor. This could among other things cause a braking effect in the rotor and thus reduce the energy output of said gas turbine and also cause water-hammering which can damage the rotor. Problem of this kind may easily occur when the quality of the stream that is used as input power source is of "low-quality". An example of such a power source is a high-pressure steam from a geothermal power stations that use saturated geothermal steam as a power source.

The quality of steam can also been reduced due to unwanted gases such as, but not limited to, CO₂ and H₂S gases, both of which have of higher specific weight than the steam. When such gases enter the rotor the efficiency of the rotor will be reduced.

Based on the above, the advantage of utilizing such as liquid/gas-trap is to prevent the above mentioned drawbacks by disposing the unwanted gases/liquid from the turbine prior to entering the rotor. Here it is assumed that a strong centrifugal force is present in the vortex formed in the port hole 113 of the vortex retainer 109 (see figure 3), causing a liquid, CO₂ and H₂S to centrifuge close to the rim of the port hole 113.

Referring to the figure 13 showing the downstream side of the liquid/gas-trap 1200, in this embodiment the liquid/gas-trap comprises a multiple of channels 1203 extending from the center hole 1202 of the water/trap towards the periphery of the liquid/gas-trap to a circular shaped channel 1201 that provides a kind of an extension from the channels 1203 a draining pipe 1204 where said water drops and contaminating gases is disposed.

It should be noted that the liquid/gas-trap shown here should not be construed as being limited to such multiple of straight channels and circular shaped channel 1201, but any means that provides an exit for the water drops and contaminating gases from the center hole to the draining pipe is just as well possible to achieve the above mentioned advantage.

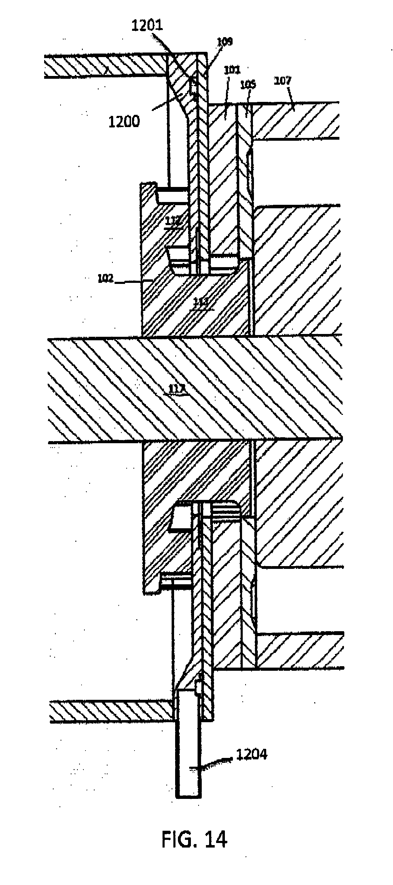

Figure 14 shows a cross section view of a turbine according to the present invention where said liquid/gas-trap shown in figures 12 and 13 has been installed between vortex retainer 109 and the rotor 102.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. Any reference signs in the claims should not be construed as limiting the scope.

## Claims

1. A turbine (100) comprising:
• a radial outflow rotor wheel (102) on a driving shaft (602), and
• a radial inflow stator (110) comprising:
○ plurality of nozzles (103) surrounding an inner circumferential space (104) adapted to form a vortex flow (1000) at the periphery of said circumferential space (104),
○ a nozzle distributor (105) with a port hole (106) for each nozzle (103) for distributing inflow into said nozzles (103) from a high pressure cavity (601) and to close the up-stream side of the nozzles (103),
○ a vortex retainer (109) adapted to provide a circular vortex port for flow exit out of the stator (110) and tangential into said radial outflow rotor wheel (102).

2. A turbine according to claim 1, wherein the radial inflow stator (110) is made of assembly of plates arranged concentrically face to face, comprising:
• a first plate (101) where said plurality of nozzles are formed at the periphery of said circumferential space (104) of said first plate (101),
• a second plate (105) forming said nozzle distributor where said port hole (106) for each nozzle (103) is formed, the second plate (105) having a circumferential hole of the same diameter as said first plate (101), and
• a third plate (109) forming said vortex retainer, the third place having a circumferential hole (113) the diameter of which is equal or less than the diameter of said inner circumferential space (104), the third plate (109) being adapted to close the downstream side of the nozzles (103) and provide a circular vortex port for flow exit out of the stator (110) and tangential into said radial outflow rotor wheel (102).

3. A turbine according to claim 1 or 2, wherein said plurality of nozzles (103) are two-dimensional nozzles contoured so as to maintain substantial constant acceleration throughout the nozzle length and where the longitudinal axis of the nozzles point substantially tangential into said inner circumferential space (104).

4. A turbine according to any of the preceding claims, wherein the contour between adjacent nozzles (103) has a bulge-like shape so as to guide the received outflow at the tip-point ends of the nozzles towards the periphery of said inner circumferential space.

5. A turbine according to any of the preceding claims, wherein said radial outflow rotor wheel comprises:
• a central cylindrical core (111) having a diameter being somewhat less than the diameter of said circumferential space and said circumferential hole of the , and
• plurality of flow paths (112) formed at the periphery of said outflow rotor wheel adapted to interact with said vortex flowing tangential to said radial outflow rotor wheel for producing driving force for the radial outflow rotor wheel, said central cylindrical core being adapted to engage with the cylindrical space formed by said nozzle plate and said vortex port plate such that the plurality of flow paths are positioned at the downstream side above said vortex port plate.

6. A turbine according to claim 1 or 5, wherein said radial outflow rotor wheel has a constant cross section of flow path and is shaped such that the inflow and the outflow from the flow path is substantially tangential to the radial outflow rotor wheel.

7. A turbine according to any of the preceding claims, further comprising at least one additional row of said stator and said outflow rotor wheel sharing said driving shaft.

8. A turbine according to any of the claim 3, wherein the total area of the stream path of said radial outflow rotor wheel is at least two times higher that the total area of said two-dimensional nozzles.

9. A turbine according to any of the preceding claims, wherein the geometry of said plurality of nozzles is adapted to the geometry of said turbine in a way such that the length of the nozzles is reduces relatively with enlargement of the turbine.

10. A turbine according to any of the preceding claims, further comprising a liquid/gas-trap (1200) adapted to be placed between said vortex retainer (109) and said rotor wheel (102) for disposing unwanted gases and/or liquids from the turbine entering said rotor (102).

11. A turbine according to claim 10, wherein said liquid/gas-trap (1200) has plate-like structure having front side and a back side having a circumferential hole of the same diameter as said first plate (101), the front side comprising channel shaped structures extending from the periphery of said circumferential hole towards to a draining pipe acting as an exit channel from said turbine (100), said front side being adapted to be situated at the downstream side of said turbine.

12. A radial inflow stator adapted to be used in a turbine according to any of the claims 1-11, comprising:
• plurality of nozzles surrounding an inner circumferential space adapted to form a vortex flow at the periphery of said circumferential space,
• a nozzle distributor with a port hole for each nozzle for distributing inflow into said nozzles from a high pressure cavity and to close the up-stream side of the nozzles,
• a vortex retainer adapted to adapted to provide a circular vortex port for flow exit out of the stator and tangential into a radial outflow rotor wheel.

13. A radial inflow stator according to claim 12, wherein the radial inflow stator is made of assembly of plates arranged concentrically face to face, comprising:
• a first plate where said plurality of nozzles are formed at the periphery of said circumferential space of said first plate,
• a second plate where said port hole for each nozzle is formed, the second plate having a circumferential hole of the same diameter as said first plate, and
• a third plate forming said vortex retainer, the third place having a circumferential hole the diameter of which is equal or less than the diameter of said inner circumferential space, the third plate being adapted to close the downstream side of the nozzles and provide a circular vortex port for flow exit out of the stator and tangential into said radial outflow rotor wheel.

14. A radial outflow rotor wheel adapted to be used in a turbine according to any of the claims 1-11, comprising:
• a central cylindrical core having a diameter being somewhat less than the diameter of said circumferential space and said circumferential hole of the, and
• plurality of flow paths formed at the periphery of said outflow rotor wheel adapted to interact with said vortex flowing tangential to said radial outflow rotor wheel for producing driving force for the radial outflow rotor wheel, said central cylindrical core being adapted to engage with the cylindrical space formed by said nozzle plate and said vortex port plate such that the plurality of flow paths are positioned at the downstream side above said vortex port plate.

15. A radial outflow rotor wheel according to claim 14, wherein said plurality of flow paths have constant cross section of flow path and is shaped such that the outflow from the flow path is substantially tangential to the radial outflow rotor wheel.
